(19) Europäisches Patentamt
European Patent Office
Office européen des brevets

(11) EP 0 568 834 B1

(12) **EUROPÄISCHE PATENTSCHRIFT**

(45) Veröffentlichungstag und Bekanntmachung des Hinweises auf die Patenterteilung:
**27.11.1996 Patentblatt 1996/48**

(51) Int Cl.[6]: **C08F 265/06**, C08F 291/00

(21) Anmeldenummer: **93105831.7**

(22) Anmeldetag: **08.04.1993**

(54) **Wässrige Polymerisatdispersion**

Aqueous polymer dispersion

Dispersion aqueuse de polymères

(84) Benannte Vertragsstaaten:
**BE DE ES FR GB IT NL SE**

(30) Priorität: **29.04.1992 DE 4213968**

(43) Veröffentlichungstag der Anmeldung:
**10.11.1993 Patentblatt 1993/45**

(73) Patentinhaber: **BASF Aktiengesellschaft**
**67063 Ludwigshafen (DE)**

(72) Erfinder:
- **Aydin, Oral, Dr.**
  **W-6800 Mannheim 1 (DE)**
- **Portugall, Michael, Dr.**
  **W-6706 Wachenheim (DE)**
- **Neutzner, Josef, Dr.**
  **W-6730 Neustadt (DE)**
- **Maechtle, Walter, Dr.**
  **W-6700 Ludwigshafen (DE)**

(56) Entgegenhaltungen:
**EP-A- 0 081 083**
**EP-A- 0 129 699**
**US-A- 4 269 749**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 568 834 B1

Printed by Jouve, 75001 PARIS (FR)

## Beschreibung

Die vorliegende Erfindung betrift eine wäßrige Polymerisatenddispersion, die eine Feststoffvolumenkonzentration von wenigstens 50 Vol-% und eine Teilchengrößenverteilung

5 bis 30 Gew.-% des Polymerisats ≤ 200 nm
10 bis 40 Gew.-% des Polymerisats ≤ 300 nm
20 bis 45 Gew.-% des Polymerisats ≤ 400 nm
25 bis 50 Gew.-% des Polymerisats ≤ 500 nm
30 bis 65 Gew.-% des Polymerisats ≤ 600 nm
50 bis 90 Gew.-% des Polymerisats ≤ 700 nm
80 bis 99 Gew.-% des Polymerisats ≤ 800 nm
100 Gew.-% des Polymerisats ≤ 1000 nm

aufweist (Feststoffvolumen = Feststoffmasse dividiert durch Feststoffdichte), dadurch erhältlich, daß man wenigstens ein radikalisch polymerisierbares Monomeres unter Zusatz wenigstens einer wäßrigen Ausgangsdispersion I eines Ausgangspolymerisats I und gegebenenfalls unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) das Ausgangspolymerisat I in der wenigsten einen wäßrigen Ausgangsdispersion I in Form dispers verteilter Ausgangspolymerisatteilchen vorliegt, von deren Gesamtmasse wenigstens 1 Gew.-% einen von Null verschiedenen Teilchendurchmesser ≤ 50 nm und wenigstens 65 Gew.-% einen Teilchendurchmesser ≥ 300 nm aufweisen,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Massen an Ausgangspolymerisaten I, II, 2 bis 60 Gew.-% beträgt,

c) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, höchstens 15 Gew.-% beträgt,

d) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

e) die Gesamtmenge der wenigstens einen zuzusetzenden wäßrigen Ausgangsdispersion II vor Beginn der radikalischen wäßrigen Emulsionspolymerisation ins Polymerisationsgefäß vorgelegt wird,

f) von der Gesamtmenge des wenigstens einen zu polymerisierenden Monomeren vor Beginn der radikalischen wäßrigen Emulsionspolymerisation nichts ins Polymerisationsgefäß vorgelegt wird,

g) die Gesamtmenge des wenigstens einen zu polymerisierenden Monomeren ab Beginn der radikalischen wäßrigen Emulsionspolymerisation dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren wenigstens 80 mol-% beträgt,

h) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden Monomeren, im Bereich von > 0 bis 10 liegt,

i) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

j) die wenigstens eine zuzusetzende wäßrige Ausgangsdispersion I, bezogen auf ihren Gehalt an Ausgangspolymerisat I, wenigstens 1 bis 6 Gew.-% an grenzflächenaktiven Substanzen enthält,

k) die wenigstens eine zuzusetzende wäßrige Ausgangsdispersion II, bezogen auf ihren Gehalt an Ausgangspolymerisat II, wenigstens 1 bis 6 Gew.-% an grenzflächenaktiven Substanzen enthält,

l) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I,II, 1 bis 6 Gew.-% grenzflächenaktive Substanzen enthält,

m) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter j), k) genannten Mindestmengen ins Polymerisationsgefäß eingebrachten grenzflächenaktiven Substanzen, auf die dem Polymerisationsgefäß zuvor bereits zugeführten Monomeren bezogen, weniger als 5 Gew.-% beträgt und

n) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

Weiterhin betrifft die vorliegende Erfindung das Verfahren zur Herstellung einer solchen wäßrigen Polymerisatenddispersion sowie ihre Verwendung als Bindemittel und als Masse zur Herstellung von Beschichtungen und Verklebungen.

Wäßrige Polymerisatdispersionen sind Systeme, die als disperse Phase in einem wäßrigen Dispersionsmedium dispers verteilte Polymerisatteilchen enthalten.

Ebenso wie Polymerisatlösungen beim Verdampfen des Lösungsmittels, weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Anwendung finden.

Wäßrige Polymerisatdispersionen mit hohem Polymerisatanteil sind insofern von besonderem Vorteil, als einerseits ihr relativ geringerer Anteil an wäßrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wäßriger Phase als Trägermedium gelagert und transportiert werden kann.

Von Nachteil ist jedoch, daß mit zunehmender Volumenkonzentration (US-A 4,130,523) des Polymerisats die Herstellung wäßriger Polymerisatdispersionen problembehaftet ist. So nimmt einerseits der Fließwiderstand (die Viskosität) zu und erschwert sowohl die Abführung der Reaktionswärme als auch die Verarbeitung der wäßrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wäßrigen Polymerisatdispersionen und sind daher in der Regel unerwünscht.

Nach Untersuchungen über den Fließwiderstand wäßriger Polymerisatdispersionen weisen solche mit einer breiten Größenverteilung (polydispers) der dispergierten Polymerisatteilchen bei gleichem Feststoffgehalt in der Regel einen geringeren Fließwiderstand auf als solche mit einer engen Größenverteilung (im Grenzfall monodispers). Ferner zeigen grobteilige wäßrige Polymerisatdispersionen unter der Prämisse gleichen Feststoffgehalts einen geringeren Fließwiderstand als feinteilige wäßrige Polymerisatdispersionen.

Aus der EP-A 129 699 ist ein Verfahren zur Herstellung einer wäßrigen Polymerisatdispersion bekannt, bei dem man in einem Polymerisationsgefäß nach dem Verfahren der radikalischen wäßrigen Emulsionspolymerisation ungesättigte Monomere in an sich bekannter Weise polymerisiert und dabei eine wäßrige Dispersion eines Ausgangspolymerisats zusetzt, wobei der Zusatz der wäßrigen Dispersion des Ausgangspolymerisats abgeschlossen sein muß, bevor 40 Gew.-% der insgesamt zu polymerisierenden Monomeren einpolymerisiert sind sowie frühestens dann erfolgen darf, wenn die mittlere Teilchengröße des bei der Polymerisation der Monomeren entstehenden Emulsionspolymerisats den zweifachen Wert der mittleren Teilchengröße der wäßrigen Dispersion des Ausgangspolymerisats aufweist. Vorzugsweise wird dabei die wäßrige Dispersion des Ausgangspolymerisats nicht über einen längeren Zeitraum, sondern auf einmal zugegeben.

Nachteilig an den so erhältlichen wäßrigen Polymerisatdispersionen ist, daß ihr Fließwiderstand oberhalb einer Feststoffvolumenkonzentration von 50 Vol.-% nicht voll zu befriedigen vermag und gemäß den Ausführungsbeispielen

die Feststoffvolumenkonzentration auf Werte unter 65 Vol.-% beschränkt ist.

Die US-A 4,130,523 betrifft ein Verfahren zur Herstellung wäßriger Polymerisatdispersionen, bei dem während des Polymerisationsprozesses laufend bereits gebildete wäßrige Polymerisatdispersion aus der Reaktionszone entfernt, gelagert und später der Reaktionszone als eine Art Ausgangspolymerisatdispersion wieder zugeführt wird. Nachteilig an diesem Verfahren ist, daß es für eine großtechnische Realisierung ungeeignet ist.

Die US-A 3,424,706 bezieht sich auf ein Verfahren zur Herstellung wäßriger Polymerisatdisperionen, deren Polymerisate wenigstens 70 bis 97 Gew.-% Vinylidenchlorid einpolymerisiert enthalten, bei dem die Polymerisation der Monomeren unter Zusatz einer wäßrigen Dispersion eines Ausgangspolymerisats erfolgt. Unter anderem enthält die US-A 3,424,706 den Hinweis, die zu polymerisierenden Monomeren und die wäßrige Dispersion des Ausgangspolymerisats miteinander zu vermischen und dieses Gemisch der einen Teil des Polymerisationsansatzes umfassenden Vorlage zuzuführen.

Nachteilig an diesem Verfahren ist, daß es auf Monomerengemische beschränkt ist, die hauptsächlich Vinylidenchlorid enthalten. Darüber hinaus vermag gemäß den Ausführungsbeispielen auch bei den nach diesem Verfahren erhältlichen wäßrigen Polymerisatdispersionen sowohl der Fließwiderstand oberhalb einer Feststoffvolumenkonzentration von 50 Vol.-%, als auch die in noch befriedigend fließfähigem Zustand erreichbare Obergrenze der Feststoffvolumenkonzentration nicht zu befriedigen.

Ziel der vorliegenden Erfindung war daher, wäßrige Polymerisatdispersionen zur Verfügung zu stellen, die in einfacher, großtechnisch geeigneter, reproduzierbarer und nicht auf spezielle Monomere beschränkter Weise bei erhöhter Feststoffvolumenkonzentration mit reduziertem Fließwiderstand sowie reduziertem Gehalt an Ausflockungen erhältlich sind.

Demgemäß wurden die eingangs definierten wäßrigen Polymerisatenddispersionen gefunden.

Bemerkenswerterweise ist der erfindungsgemäße Gegenstand nicht auf die radikalische wäßrige Emulsionspolymerisation von hauptsächlich oder ausschließlich aus Vinyl- und/oder Vinylidenhalogeniden zusammengesetzten Monomerengemischen beschränkt, ist doch allgemein bekannt, daß die Entwicklung der dispersen Phase im Fall von Vinyl- und/oder Vinylidenhalogeniden verschiedenen Monomeren ein wesentlich komplexeres Erscheinigungsbild aufweist.

Für das erfindungsgemäße Verfahren kommen daher als radikalisch polymerisierbare Monomere unter anderen insbesondere monoethylenisch ungesättigte Monomere wie Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf die Gesamtmenge der nach dem Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Beeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Als grenzflächenaktive Substanzen kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als besonders geeignete grenzflächenaktive Substanzen haben sich Verbindungen der allgemeinen Formel I

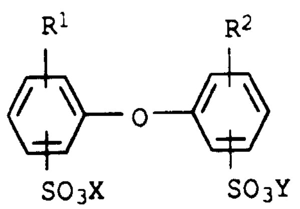

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6,12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: $C_8$- bis $C_{36}$) als grenzflächenaktive Substanzen eingesetzt. Die Verbindungen I sind allgemein bekannt, z.B. aus der US-A 4,269,749, und im Handel erhältlich. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/ oder Ammoniumperoxidisulfat angewendet werden. Anstelle eines wasserlöslichen Eisen(II)salzes wird häufig eine Kombination aus wasserlöslichen Fe/ V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert. Zur pH-Wert Regulierung des Polymerisationsmediums können während der erfindungsgemäßen radikalischen wäßrigen Emulsionspolymerisation beispielsweise Ammoniak oder Schwefelsäure zugegeben werden. Ein weiteres an sich übliches Hilfsmittel ist das Natriumsalz der Ethylendiamintetraessigsäure.

Die für die erfindungsgemäße radikalische wäßrige Emulsionspolymerisation beispielhaft als geeignet genannten radikalisch polymerisierbaren Monomeren eignen sich nicht nur als Konstituenten des erfindungsgemäß zu polymerisierenden Monomerengemisches. Vielmehr eignen sie sich in gleicher Weise wie die für die erfindungsgemäße radikalische wäßrige Emulsionspolymerisation empfohlenen Polymerisationsinitiatoren, das Molekulargewicht regelnden Verbindungen und den pH-Wert regulierenden Mittel auch als Konstituenten der Ausgangspolymerisate I, II bzw. der diese enthaltenden Ausgangsdispersionen, wobei die Monomeren-, Regler- und Initiatorenzusammensetzung zur Herstellung der wäßrigen Ausgangsdispersionen I, II mit derjenigen für das erfindungsgemäße Verfahren sowohl dekkungsgleich als auch verschieden sein kann. Die ebenda gemachten Aussagen gelten im übertragenen Sinn notwendigerweise auch für die zur Herstellung der wäßrigen Ausgangsdispersionen I, II einzusetzenden grenzflächenaktiven Substanzen, sind doch bei dem erfindungsgemäßen Verfahren, bezogen auf die Mengen der Ausgangspolymerisate I bzw. II, jeweils wenigstens 1 bis 6 Gew.-% der abschließend in der erfindungsgemäßen wäßrigen Polymerisatenddispersion enthaltenen grenzflächenaktiven Substanzen bereits Bestandteil der zuzusetzenden wäßrigen Ausgangsdispersionen I, II. Es handelt sich hierbei um die Mengen an grenzflächenaktiven Substanzen, die in der Regel zur Herstellung von stabilen wäßrigen Ausgangsdispersionen I, II wenigstens erforderlich sind. Auch die Aussagen über Polymerisationsdruck und -temperatur können übertragen werden.

Erfindungsgemäß zuzusetzende wäßrige Ausgangsdispersionen I wenigstens eines Ausgangspolymerisats I, in denen das Ausgangspolymerisat in Form dispers verteilter Ausgangspolymerisatteilchen vorliegt, von deren Gesamtmasse wenigstens 1 Gew.-% einen von Null verschiedenen Teilchendurchmesser $\leq 50$ nm und wenigstens 65 Gew.-% einen Teilchendurchmesser $\geq 300$ nm aufweisen, sind in einfacher Weise beispielsweise dadurch erhältlich, daß man eine im wesentlichen monodisperse feinteilige wäßrige Ausgangsdispersion III eines dispers verteilten Ausgangspolymerisats III mit einem gewichtsmittleren Teilchendurchmesser $\bar{d}_w \leq 50$ nm, vorzugsweise 20 bis 50 nm, und eine grobteilige wäßrige Ausgangsdispersion IV eines dispers verteilten Ausgangspolymerisats IV mit einem entsprechenden Anteil von Polymerisatteilchen mit einem Teilchendurchmesser $\geq 300$ nm zusammengibt. Das Zusammengeben kann dabei auch so erfolgen, daß man die Ausgangsdispersionen III, IV dem die erfindungsgemäße Polymerisation beinhaltenden Polymerisationsgefäß räumlich getrennt zuführt, und so erst im Polymerisationsgefäß zu einer wäßrigen Ausgangsdispersion I vereint.

In der Regel sind die Teilchendurchmesser der wäßrigen Ausgangsdispersion I $\leq 2000$ nm.

Wäßrige Ausgangsdispersionen III sind in an sich bekannter Weise erhältlich. Entsprechende Lehren sind z.B. in Houben-Weyl, Methoden der Organischen Chemie, Band E20, Teil I, Makromolekulare Stoffe, Georg-Thieme-Verlag, Stuttgart, 1987, Seiten 248 bis 268 zu finden. Bei einem vorzugsweise angewendeten Feststoffgehalt von 20 bis 40 Gew.-% sind sie in besonders einfacher Weise z.B. dadurch erhältlich, daß man die wäßrige Phase, die Monomeren, die radikalischen Initiatoren (normalerweise 0,1 bis 5 Gew.-%, bezogen auf die Menge der zu polymerisierenden Ausgangsmonomeren) und grenzflächenaktiven Substanzen (üblicherweise 10 bis 50 Gew.-%, bezogen auf die zu polymerisierenden Ausgangsmonomeren) bei niederer Temperatur miteinander vermischt und nach Vermischen auf die Polymerisationstemperatur erwärmt und polymerisiert (zunehmende Mengen an grenzflächenaktiver Substanz bedingen in der Regel einen abnehmenden Teilchendurchmesser $\bar{d}_w$). Bei einer anderen Variante umfaßt die Vorlage im wesentlichen alle Komponenten, ein Teil des Polymerisationsinitiators wird jedoch nach Erwärmen auf Reaktionstemperatur unter Aufrechterhalten derselben kontinuierlich zugeführt.

Ausgangsdispersionen IV sind ebenfalls in dem Fachmann an sich bekannter Weise erhältlich. Im wesentlichen können sie wie die Ausgangsdispersionen III hergestellt werden, jedoch mit dem Unterschied, daß die eingesetzt Menge grenzflächenaktiver Substanzen, bezogen auf die zu polymerisierenden Monomeren, in der Regel lediglich 1 bis 5 Gew.-% beträgt. Bevorzugte Ausgangsdispersionen IV sind solche, die eine breite Teilchenverteilung aufweisen. So sollten wenigstens 25 Gew.-% der Ausgangspolymerisatteilchen IV einen Teilchendurchmesser unterhalb von 300 nm aufweisen. Als solche Ausgangsdispersionen IV kommen u.a. wäßrige Polymerisatenddispersionen der DE-A 42 13 965 (O.Z. 0050/43182) und der DE-A 42 13 967 (O.Z. 0050/43184) in Betracht. Normalerweise werden die Ausgangsdispersionen IV mit einem Feststoffgehalt oberhalb von 50 Gew.-% hergestellt.

Vorzugsweise werden die Ausgangsdispersionen III und IV in solchen Mengen zusammengegeben, daß von der Gesamtmasse der Ausgangspolymerisatteilchen I der resultierenden wäßrigen Ausgangsdispersion I höchstens 10 Gew.-% einen von Null verschiedenen Teilchendurchmesser ≤ 50 nm aufweisen.

Die Mitverwendung der wäßrigen Ausgangsdispersionen II ist nicht essentiell, bedingt jedoch verfahrenstechnische Vorteile. Besondere Anforderungen werden daher an die Ausgangsdispersion II nicht gestellt. Vorzugsweise handelt es sich um eine wäßrige Polymerisatdispersion mit einer breiten Teilchenverteilung, die beispielsweise mit der wäßrigen Ausgangsdispersion I identisch sein kann. Selbstverständlich kann die erfindungsgemäß mitzuverwendende wäßrige Ausgangsdispersion II auch unmittelbar vor Beginn des eigentlichen erfindungsgemäßen Verfahrens im selben Polymerisationsgefäß fertiggestellt werden, sei es, daß man zu diesem Zweck im Polymerisationsgefäß beispielsweise verschiedene Polymerisatdispersionen miteinander mischt (einfacher Weg zur Herstellung einer wäßrigen Ausgangsdispersion II mit breiter Teilchenverteilung) und/oder darin eine radikalische wäßrige Emulsionspolymerisation durchführt.

Im letzteren Fall können das erfindungsgemäße Verfahren und das Herstellverfahren für die Ausgangsdispersion II nahtlos ineinander übergehen, insbesondere dann, wenn zur Fertigstellung der wäßrigen Ausgangsdispersion II das Zulaufverfahren angewendet wird, bei dem man einen Teil des Polymerisationsansatzes vorlegt, auf die Polymerisationstemperatur erhitzt und unter Aufrechterhaltung der Polymerisation anschließend den Rest in gegebenenfalls räumlich getrennten Zuläufen zuführt. Umfaßt die Ausgangsdispersion II im wesentlichen nur Polymerisatteilchen mit einem Durchmesser ≤ 50 nm, beträgt die Masse des so zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II vorzugsweise ≤ 5 Gew.-%, besonders bevorzugt 2 bis 5 Gew.-%.

Selbstverständlich kann sich im Verlauf der erfindungsgemäßen wäßrigen radikalischen Emulsionspolymerisation sowohl die Zusammensetzung der zuzuführenden Monomeren, als auch die Zusammensetzung der zuzuführenden wäßrigen Ausgangsdispersion I ändern. Ferner können die Zufuhren sowohl stufenförmig als auch kontinuierlich oder nach der Gradientenfahrweise erfolgen. Vorzugsweise erfolgt die Zufuhr der zu polymerisierenden Monomeren relativ zur Zufuhr der wenigstens einen wäßrigen Ausgangsdispersion I so, daß V zu jedem Zeitpunkt nach Beginn der erfindungsgemäßen wäßrigen Emulsionspolymerisation im Bereich > 0 bis 5 liegt. Dabei wird sowohl für die zu polymerisierenden Monomeren als auch die wenigstens eine wäßrige Ausgangsdispersion I eine kontinuierliche Zufuhr bevorzugt. Mit besonderem Vorteil werden die zu polymerisierenden Monomeren und die wenigstens eine zuzuführende wäßrige Ausgangsdispersion I in kontinuierlicher Weise zeitgleich beginnend synchron zugeführt, wobei die Zufuhr beider vorzugsweise zeitgleich endet. Darüber hinaus werden die zu polymerisierenden Monomeren der Reaktionszone in vorteilhafter Weise so zugeführt, daß zu jedem Zeitpunkt dieser Zufuhr der Polymerisationsumsatz der bereits zuvor dem Polymerisationsgefäß zugeführten Monomeren wenigstens 90, besonders bevorzugt wenigstens 98 mol-% beträgt. Die zu polymerisierenden Monomeren können sowohl für sich, als auch in wäßriger Phase voremulgiert zugeführt werden. Werden wäßrige Polymerisatenddispersionen mit besonders hoher Feststoffvolumenkonzentration angestrebt, erfolgt die Zufuhr der zu polymerisierenden Monomeren vorzugsweise für sich.

Die Zufuhr der radikalischen Polymerisationsinitiatoren erfolgt zweckmäßigerweise synchron zur Zufuhr der zu polymerisierenden Monomeren. Sie kann sowohl über einen räumlich getrennten Zulauf erfolgen, als auch z.B. im Gemisch mit der zuzuführenden wäßrigen Ausgangsdispersion I.

Der Start der erfindungsgemäßen wäßrigen radikalischen Emulsionspolymerisation kann z.B. so erfolgen, daß einer bereits Polymerisationsinitiator enthaltenden Vorlage nach Erwärmen auf die Polymerisationstemperatur, zu polymerisierende Monomere zugeführt werden oder daß diese Zufuhr von einer Initiatorzufuhr begleitet wird, falls die auf die Polymerisationstemperatur erwärmte Vorlage solche nicht enthält.

Werden ab Beginn der erfindungsgemäßen radikalischen wäßrigen Emulsionspolymerisation über die in der wenigstens einen wäßrigen Ausgangsdispersion I notwendigerweise enthaltenen Mindestmengen an grenzflächenaktiven Substanzen hinaus grenzflächenaktive Substanzen dem Polymerisationsgefäß zugeführt, so erfolgt diese Zufuhr mit Vorteil so, daß die zu jedem Zeitpunkt ab Beginn der erfindungsgemäßen radikalischen wäßrigen Emulsionspolymerisation im Polymerisationsgefäß enthaltene Menge an grenzflächenaktiven Substanzen, abzüglich der als in Form der unter j), k) genannten Mindestmengen ins Polymerisationsgefäß eingebrachten grenzflächenaktiven Substanzen, auf die dem Polymerisationsgefäß bereits zugeführten Monomeren bezogen, weniger als 3 Gew.-% beträgt. Vorzugsweise erfolgt diese Zufuhr synchron zur Monomerenzufuhr.

Die Masse des wenigstens einen zugesetzten Ausgangspolymerisats I beträgt mit Vorteil, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 2 bis 10 Gew.-% und die Menge des wenigstens einen zu polymerisierenden Monomeren beträgt in derselben Weise bezogen vorzugsweise wenigstens 40, besonders bevorzugt wenigstens 80 Gew.-%.

Nach Beendigung des eigentlichen erfindungsgemäßen Polymerisationsverfahrens kann noch einige Stunden unter Aufrechterhaltung der Polymerisationstemperatur nachgerührt werden. Daran können sich übliche Maßnahmen zur Restmonomerenentfernung, zur Einstellung eines anderen pH-Wertes oder sonstige Methoden zur Nachstabilisierung, inklusive nachträglicher Zugabe grenzflächenaktiver Substanzen, anschließen. Selbstverständlich können die verschiedenen möglichen, in der Regel räumlich getrennt erfolgenden, Zuläufe unmittelbar vor Eintritt in das Polymerisationsgefäß miteinander vermischt werden.

Bevorzugte Klassen von Endpolymerisaten sind solche, die

- zu 70 bis 100 Gew.-% aus Estern der Acryl- und/oder Methacrylsäure mit 1 bis 12 C-Atome aufweisenden Alkanolen und/oder Styrol

oder

- zu 70 bis 100 Gew.-% aus Styrol und/oder Butadien

oder

- zu 70 bis 100 Gew.-% aus Vinylchlorid und/oder Vinylidenchlorid

aufgebaut sind, wobei die Klasse der Acrylate besonders bevorzugt ist und vorzugsweise nachfolgende Monomerenzusammensetzungen umfaßt:

70 bis 99 Gew.-% wenigstens eines Esters der Acryl- und/oder Methacrylsäure mit 1 bis 8 C-Atome aufweisenden Alkanolen,

1 bis 5 Gew.-% Acrylsäure, Methacrylsäure oder deren Gemisch und

0 bis 25 Gew.-% Vinylacetat, Styrol oder deren Gemisch.

Bei der erfindungsgemäßen radikalischen wäßrigen Emulsionspolymerisation lassen sich in einfacher Weise wäßrige Polymerisatenddispersionen erhalten, die eine sehr breite Teilchenverteilung aufweisen, welche sich wie folgt charakterisieren läßt:

5 bis 30 Gew.-% des Endpolymerisats ≤ 200 nm
10 bis 40 Gew.-% des Endpolymerisats ≤ 300 nm
20 bis 45 Gew.-% des Endpolymerisats ≤ 400 nm
25 bis 50 Gew.-% des Endpolymerisats ≤ 500 nm
30 bis 65 Gew.-% des Endpolymerisats ≤ 600 nm
50 bis 90 Gew.-% des Endpolymerisats ≤ 700 nm
80 bis 99 Gew.-% des Endpolymerisats ≤ 800 nm
100 Gew.-% des Endpolymerisats ≤ 1000 nm.

Diese spezielle Teilchengrößenverteilung ist vermutlich für den reduzierten Fließwiderstand der erfindungsgemäßen wäßrigen Polymerisatenddispersionen verantwortlich, die normalerweise Newton'sches Fließverhalten aufweisen. Die Teilchengrößenverteilung (Bei weniger breiten Teilchenverteilungen der Ausgangsdispersionen wurde zur Bestimmung der Teilchengrößen ebenfalls die analytische Ultrazentrifuge angewendet (vgl. W. Mächtle, Makromolekulare Chemie, Bd. 185 (1984), S. 1025-1039).) wurde mit der sogenannten Coupling-PSD-Technik in der analytischen Ultrazentrifuge bestimmt (siehe W. Mächtle, Angewandte Makromolekulare Chemie 162 (1988) 35-42 (Nr. 2735)). Unterhalb einer Feststoffvolumenkonzentration von 50 Vol.-% nimmt der Einfluß der Teilchengrößenverteilung auf den Fließwiderstand zunehmend ab. Die erfindungsgemäßen wäßrigen Polymerisatenddispersionen werden wie beschrieben in der Regel mit voll befriedigender Reproduzierbarkeit und in Abwesenheit von Ausflockungen mit Feststoffvolumenkonzentrationen von bis zu 75 Vol.-% in großtechnisch einfach realisierbarer Weise erhalten.

Besonders ausgeprägt entfalten die erfindungsgemäßen wäßrigen Polymerisatenddispersionen ihre vorteilhaften Eigenschaften bei Feststoffvolumenkonzentrationen oberhalb von 65 Vol.-%, weshalb solche Polymerisatenddispersionen bevorzugt sind. Sie eignen sich generell als Bindemittel sowie als Massen zur Herstellung von Beschichtungen und Verklebungen, wobei diesbezüglich in an sich bekannter Weise zusätzliche Hilfsstoffe wie Filmbildehilfsmittel, Füllstoffe oder Weichmacher zugesetzt werden können.

Beispiele

Beispiel 1

Herstellung von Ausgangsdispersionen III

AIIIa): In ein Gemisch aus

| | |
|---|---|
| 51,12 kg | Wasser, |
| 0,4 kg | einer 30 gew.-%igen wäßrigen $H_2O_2$-Lösung, |
| 20,0 kg | n-Butylacrylat und |
| 18,8 kg | einer 45 gew.-%igen wäßrigen Lösung der Dowfax 2A1 entsprechenden grenzflächenaktiven Substanz |

wurden bei Raumtemperatur 50 Gew.-% des Zulauf eingerührt, wobei die Polymerisation einsetzt und die Temperatur ansteigt. Nach Erreichen einer Reaktionstemperatur von 53°C wurde unter Aufrechterhalten dieser Temperatur innerhalb von 30 min die zweite Hälfte des Zulauf kontinuierlich zugegeben. Die so erhältliche wäßrige Ausgangsdispersion IIIa) wies bei einem Feststoffgehalt von 30,1 Gew.-% und einem gewichtsmittleren Teilchendurchmesser von 31,8 nm eine im wesentlichen monodisperse Teilchenverteilung auf.

Zulauf:

| | |
|---|---|
| 4,0 kg | Wasser, |
| 0,2 kg | Ascorbinsäure und |
| 0,01 kg | Eisen(II)sulfat. |

AIIIb): In ein Gemisch aus

| | |
|---|---|
| 65,4 kg | Wasser, |
| 25,0 kg | n-Butylacrylat und |
| 22,25 kg | einer 45 gew.-%igen wäßrigen Lösung der Dowfax 2A1 entsprechenden grenzflächenaktiven Substanz |

wurde bei Raumtemperatur zunächst eine Lösung von 0,0625 kg Ascorbinsäure und 0,005 kg Eisen(II)-sulfat in 2 kg Wasser eingerührt und anschließend innerhalb von 3 min ein Gemisch aus 2 kg Wasser und 0,65 kg einer 30 gew.-%igen wäßrigen Wasserstoffperoxidlösung zugegeben. Anschließend wurde die Temperatur während 1 h auf 52°C gehalten. Danach wurde auf Raumtemperatur abgekühlt und nach Zugabe einer Mischung von 0,05 kg Ascorbinsäure in 1 kg Wasser noch 2 h nachgerührt.

Die so erhältliche wäßrige Ausgangsdispersion IIIb) wies einen Feststoffgehalt von 30,2 Gew.-% und bei nahezu monodisperser Teilchenverteilung einen gewichtsmittleren Teilchendurchmesser $\bar{d}_w$ von 32 nm auf.

Beispiel 2

Herstellung von Ausgangsdispersionen IV

AIVa): Ein Gemisch aus

| | |
|---|---|
| 324 g | Wasser, |
| 1,8 g | Ascorbinsäure, |
| 0,024 g | Eisen(II)-sulfat, |
| 12 g | einer 10 gew.-%igen wäßrigen Schwefelsäure und |
| 30 g | Zulauf II |

wurde auf 85°C erhitzt und anschließend zeitgleich beginnend die Restmenge von Zulauf II und der Zulauf I kontinuierlich gemäß nachfolgendem Zeitschema zugeführt, wobei die Temperatur bei 85°C gehalten wurde:

Zulauf I:

| | |
|---|---|
| 2 Gew.-% | innerhalb von 15 min, dann |
| 4 Gew.-% | innerhalb von 15 min und dann die restlichen |
| 94 Gew.-% | innerhalb von 180 min. |

Restmenge Zulauf II: innerhalb von 240 min. Abschließend wurde mit 25 gew.-%iger wäßriger Ammoniaklösung der pH-Wert des wäßrigen Dispergiermediums auf 5,8 eingestellt.

Zulauf I:

| | |
|---|---|
| 494 g | Wasser, |
| 2352 g | n-Butylacrylat, |
| 48 g | Methacrylsäure, |
| 0,6 g | Ascorbinsäure und |
| 137 g | einer 35 gew.-%igen wäßrigen Lösung des Natriumsalzes des Schwefelsäurehalbesters von ethoxyliertem iso-Octylphenol (EO-Grad: 25). |

Zulauf II:

| | |
|---|---|
| 300 g | Wasser und |
| 12 g | Natriumperoxidisulfat. |

Die so erhältliche wäßrige Ausgangsdispersion IVa) wies einen Feststoffgehalt von 66,4 Gew.-% und nachfolgende Teilchenverteilung auf:

23 Gew.-% ≤ 300 nm sowie
77 Gew.-% > 300 und ≤ 1000 nm.

AIVb): Ein Gemisch aus

| | |
|---|---|
| 22,63 g | Zulauf II, |
| 42,00 g | Zulauf III und |
| 300 g | Wasser |

wurde auf 85°C erhitzt und unter Aufrechterhaltung dieser Temperatur zeitgleich beginnend kontinuierlich mit Zulauf I (4 Gew.-% innerhalb von 30 min, dann Restmenge (96 Gew.-%) innerhalb von 3 h) und der Restmenge von Zulauf III (innerhalb von 4 h) versetzt. Die Restmenge von Zulauf II wurde 30 min nach Beginn von Zulauf I kontinuierlich innerhalb von 3 h zugeführt.

Zulauf I:

| | |
|---|---|
| 1710 g | n-Butylacrylat, |
| 250 g | Methylmethacrylat, |
| 40 g | Methacrylsäure, |
| 1 g | tert.-Dodecylmercaptan |
| 50 g | einer 20 gew.-%igen wäßrigen Lösung ehtoxylierter Fettalkohole ($C_{16}$ bis $C_{18}$, EO-Grad: 18), |
| 100 g | einer 20 gew.-%igen wäßrigen Lösung der Dowfax 2A1 entsprechenden grenzflächenaktiven Substanz, |
| 1 g | 3-Marcaptopropyltrimethoxysilan und |
| 470 g | Wasser. |

Zulauf II:

| | |
|---|---|
| 13,33 g | der wäßrigen Ausgangsdispersion IIIb) aus Bsp. 1, |

| | |
|---|---|
| 5 g | einer 20 gew.-%igen wäßrigen Lösung der Dowfax 2A1 entsprechenden grenzflächenaktiven Substanz, |
| 8 g | einer 25 gew.-%igen wäßrigen Ammoniaklösung und |
| 200 g | Wasser. |

Zulauf III:

| | |
|---|---|
| 10 g | Natriumperoxidisulfat in |
| 200 g | Wasser. |

Die so erhältliche wäßrige Ausgangsdispersion IVb) wies einen Feststoffgehalt von 61,1 Gew.-% und nachfolgende Teilchenverteilung auf:

6 Gew.-% ≤ 300 nm
94 Gew.-% > 300 nm und ≤ 500 nm.

Beispiel 3 Herstellung erfindungsgemäßer wäßriger Polymerisatenddispersionen

Ea): Als wäßrige Ausgangsdispersion IIa) wurde ein Viertel des Zulauf I in ein Polymerisationsgefäß vorgelegt und auf 85°C erhitzt. Anschließend wurden die Restmenge des Zulauf I und die Zuläufe II, III unter Aufrechterhaltung der 85°C zeitgleich beginnend und endend kontinuierlich innerhalb von 2 h zugeführt. Danach wurde noch 1 h bei 85°C gerührt.

Zulauf I: AIa)

| | |
|---|---|
| 1150 g | Ausgangsdispersion IVa) aus Bsp. 2, |
| 100 g | Ausgangsdispersion IIIa) aus Bsp. 1, |
| 10 g | Wasser, |
| 2 g | einer 20 gew.-%igen wäßrigen Lösung der Dowfax 2A1 entsprechenden grenzflächenaktiven Substanz und |
| 8 g | einer 70 gew.-%igen wäßrigen Lösung an t-Butylhydroperoxid. |

Zulauf II:

635 g n-Butylacrylat.

Zulauf III:

| | |
|---|---|
| 1000 g | Wasser, |
| 3 g | Ascorbinsäure, |
| 0,2 g | Eisen(II)-sulfat und |
| 1 g | Natriumsalz der Ethylendiamintetraessigsäure. |

Eb): In ein Polymerisationsgefäß wurde ein Gemisch aus 2,0 g Natriumperoxidisulfat und 200 g Wasser vorgelegt und auf 85°C erhitzt. Anschließend wurden innerhalb von 30 min 4 Gew.-% an Zulauf I unter Aufrechterhaltung der 85°C kontinuierlich zugeführt und so eine wäßrige Ausgangsdispersion AIIb erzeugt. In diese wurden anschließend Zulauf II und die Restmenge von Zulauf I zeitgleich beginnend und endend kontinuierlich innerhalb von 3,5 h zugeführt (85°C).

Zulauf I:

| | |
|---|---|
| 1710 g | n-Butylacrylat, |
| 250 g | Methylmethacrylat, |
| 40 g | Methacrylsäure, |
| 100 g | einer 20 gew.-%igen wäßrigen Lösung der Dowfax 2A1 entsprechenden grenzflächenaktiven Substanz, |
| 50 g | einer 20 gew.-%igen wäßrigen Lösung ethoxylierter Fettalkohole ($C_{16}$ bis $C_{18}$, EO-Grad: 18), |

1 g tert.-Dodecylmercaptan,
1 g 3-Mercaptopropyltrimethoxysilan und
277 g Wasser.

Zulauf II AIb):
13,33 g wäßrige Ausgangsdispersion IIb) aus Bsp. 1,
250 g wäßrige Ausgangsdispersion IVb) aus Bsp. 2,
100 g Wasser
8 g 25 gew.-%ige wäßrige Ammoniaklösung und
8 g Natriumperoxidisulfat.

Ec): Wie Eb), in Zulauf I wurden jedoch die 277 g Wasser durch 292 g Wasser ersetzt und Zulauf II enthielt anstelle von 250 g AIVb) lediglich 166,7 g AIVb).

Ed): Wie Eb), in Zulauf I wurden jedoch die 277 g Wasser durch 307 g Wasser ersetzt und Zulauf II enthielt anstelle von 250 g AIVb) lediglich 83,3 g AIVb).

Die so erhaltenen Polymerisatenddispersionen waren im wesentlichen frei an Ausflockungen und sind in der nachfolgenden Tabelle charakterisiert (FG = Feststoffgehalt in Gew.-%, FV = Feststoffvolumenkonzentration in Vol.-%, $\eta$ = dynamische Viskosität bei 23°C und einem Geschwindigkeitsgefälle von 489 $s^{-1}$ gemäß DIN 53 019 in mPa·s).

Die Teilchengrößenverteilung gibt jeweils den Gewichtsanteil (Gew.-%) des Endpolymerisats wieder, dessen Teilchendurchmesser ≤ x nm ist, wobei x ein Element aus der Menge (200, 300, 400, 500, 600, 700, 800, 1000} ist,

Tabelle

| | FG | FV | η | 200 | 300 | 400 | 500 | 600 | 700 | 800 | 1000 |
|---|---|---|---|---|---|---|---|---|---|---|---|
| Ea) | 71,3 | 65,8 | 580 | 30 | 40 | 44 | 46 | 48 | 58 | 90 | 100 |
| Eb) | 72,6 | 66,7 | 750 | 9 | 17 | 30 | 37 | 65 | 90 | 95 | 100 |
| Ec) | 72,7 | 66,7 | 540 | 16 | 20 | 28 | 35 | 40 | 90 | 95 | 100 |
| Ed) | 72,2 | 66,3 | 290 | 8 | 13 | 22 | 28 | 30 | 78 | 98 | 100 |

## Patentansprüche

**1.** Wäßrige Polymerisatenddispersion, die eine Feststoffvolumenkonzentration von wenigstens 50 Vol-% und die Teilchengrößenverteilung

5 bis 30 Gew.-% des Polymerisats ≤ 200 nm
10 bis 40 Gew.-% des Polymerisats ≤ 300 nm
20 bis 45 Gew.-% des Polymerisats ≤ 400 nm
25 bis 50 Gew.-% des Polymerisats ≤ 500 nm
30 bis 65 Gew.-% des Polymerisats ≤ 600 nm
50 bis 90 Gew.-% des Polymerisats ≤ 700 nm
80 bis 99 Gew.-% des Polymerisats ≤ 800 nm
100 Gew.-% des Polymerisats ≤ 1000 nm

aufweist, dadurch erhältlich, daß man wenigstens ein radikalisch polymerisierbares Monomeres unter Zusatz wenigstens einer wäßrigen Ausgangsdispersion I eines Ausgangspolymerisats I und gegebenenfalls unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) das Ausgangspolymerisat I in der wenigsten einen wäßrigen Ausgangsdispersion I in Form dispers verteilter Ausgangspolymerisatteilchen vorliegt, von deren Gesamtmasse wenigstens 1 Gew.-% einen von Null verschiedenen Teilchendurchmesser ≤ 50 nm und wenigstens 65 Gew.-% einen Teilchendurchmesser ≥ 300 nm aufweisen,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Massen an Ausgangspolymerisaten I, II, 2 bis 60 Gew.-% beträgt,

c) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, höchstens 15 Gew.-% beträgt,

d) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

e) die Gesamtmenge der wenigstens einen zuzusetzenden wäßrigen Ausgangsdispersion II vor Beginn der radikalischen wäßrigen Emulsionspolymerisation ins Polymerisationsgefäß vorgelegt wird,

f) von der Gesamtmenge des wenigstens einen zu polymerisierenden Monomeren vor Beginn der radikalischen wäßrigen Emulsionspolymerisation nichts ins Polymerisationsgefäß vorgelegt wird,

g) die Gesamtmenge des wenigstens einen zu polymerisierenden Monomeren ab Beginn der radikalischen wäßrigen Emulsionspolymerisation dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren wenigstens 80 mol-% beträgt,

h) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden Monomeren, im Bereich von > 0 bis 10 liegt,

i) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

j) die wenigstens eine zuzusetzende wäßrige Ausgangsdispersion I, bezogen auf ihren Gehalt an Ausgangspolymerisat I, wenigstens 1 bis 6 Gew.-% an grenzflächenaktiven Substanzen enthält,

k) die wenigstens eine zuzusetzende wäßrige Ausgangsdispersion II, bezogen auf ihren Gehalt an Ausgangspolymerisat II, wenigstens 1 bis 6 Gew.-% an grenzflächenaktiven Substanzen enthält,

1) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I,II, 1 bis 6 Gew.-% grenzflächenaktive Substanzen enthält,

m) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter j), k) genannten Mindestmengen ins Polymerisationsgefäß eingebrachten grenzflächenaktiven Substanzen, auf die dem Polymerisationsgefäß zuvor bereits zugeführten Monomeren bezogen, weniger als 5 Gew.-% beträgt und

n) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

**2.** Wäßrige Polymerisatenddispersion nach Anspruch 1, dadurch erhältlich, daß man die zu polymerisierenden Monomeren und die wenigstens eine zuzuführende wäßrige Ausgangsdispersion I in kontinuierlicher Weise zeitgleich beginnend und endend zuführt.

**3.** Wäßrige Polymerisatenddispersion nach Anspruch 1 oder 2, wobei die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 2 bis 10 Gew.-% beträgt.

**4.** Wäßrige Polymerisatenddispersion nach den Ansprüchen 1 bis 3, wobei die Masse des wenigstens einen zu polymerisierenden Monomeren, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, wenigstens 80 Gew.-% beträgt.

**5.** Wäßrige Polymerisatenddispersion nach den Ansprüchen 1 bis 4, deren Polymerisat

- zu 70 bis 100 Gew.-% aus Estern der Acryl- und/oder Methacrylsäure mit 1 bis 12 C-Atome aufweisenden Alkanolen und/oder Styrol

oder

- zu 70 bis 100 Gew.-% aus Styrol und/oder Butadien

oder

- zu 70 bis 100 Gew.-% aus Vinylchlorid und/oder Vinylidenchlorid

aufgebaut ist.

**6.** Wäßrige Polymerisatenddispersion nach den Ansprüchen 1 bis 5, die wenigstens eine grenzflächenaktive Substanz der allgemeinen Formei I

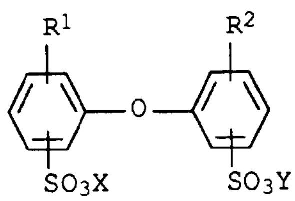

(I),

in der $R^1$ und $R^2$ Wasserstoff oder $C_4$- bis $C_{24}$-Alkyl bedeuten und nicht gleichzeitig Wasserstoff sind und X und Y Alkalimetallionen und/oder Ammoniumionen sein können, enthält.

**7.** Wäßrige Polymerisatenddispersion nach den Ansprüchen 1 bis 6, deren Feststoffvolumenkonzentration $\geq$ 65 Vol-% beträgt.

**8.** Verfahren zur Herstellung einer wäßrigen Polymerisatenddispersion, dadurch gekennzeichnet, daß man wenigstens ein radikalisch polymerisierbares Monomeres unter zusatz wenigstens einer wäßrigen Ausgangsdispersion I eines Ausgangspolymerisats I und gegebenenfalls unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisatinitiatoren mit der Maßgabe polymerisiert, daß

a) das Ausgangspolymerisat I in der wenigsten einen wäßrigen Ausgangsdispersion I in Form dispers verteilter Ausgangspolymerisatteilchen vorliegt, von deren Gesamtmasse wenigstens 1 Gew.-% einen von Null verschiedenen Teilchendurchmesser ≤ 50 nm und wenigstens 65 Gew.-% einen Teilchendurchmesser ≥ 300 nm aufweisen,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Massen an Ausgangspolymerisaten I, II, 2 bis 60 Gew.-% beträgt,

c) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, höchstens 15 Gew.-% beträgt,

d) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

e) die Gesamtmenge der wenigstens einen zuzusetzenden wäßrigen Ausgangsdispersion II vor Beginn der radikalischen wäßrigen Emulsionspolymerisation ins Polymerisationsgefäß vorgelegt wird,

f) von der Gesamtmenge des wenigstens einen zu polymerisierenden Monomeren vor Beginn der radikalischen wäßrigen Emulsionspolymerisation nichts ins Polymerisationsgefäß vorgelegt wird,

g) die Gesamtmenge des wenigstens einen zu polymerisierenden Monomeren ab Beginn der radikalischen wäßrigen Emulsionspolymerisation dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren wenigstens 80 mol-% beträgt,

h) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden Monomeren, im Bereich von > 0 bis 10 liegt,

i) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

j) die wenigstens eine zuzusetzende wäßrige Ausgangsdispersion I, bezogen auf ihren Gehalt an Ausgangspolymerisat I, wenigstens 1 bis 6 Gew.-% an grenzflächenaktiven Substanzen enthält,

k) die wenigstens eine zuzusetzende wäßrige Ausgangsdispersion II, bezogen auf ihren Gehalt an Ausgangspolymerisat II, wenigstens 1 bis 6 Gew.-% an grenzflächenaktiven Substanzen enthält,

1) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I,II, 1 bis 6 Gew.-% grenzflächenaktive Substanzen enthält,

m) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter j), k) genannten Mindestmengen ins Polymerisationsgefäß eingebrachten grenzflächenaktiven Substanzen, auf die dem Polymerisationsgefäß zuvor bereits zugeführten Monomeren bezogen, weniger als 5 Gew.-% beträgt und

n) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

**9.** Verwendung einer wäßrigen Polymerisatenddispersion gemäß den Ansprüchen 1 bis 7 als Bindemittel sowie als Masse zur Herstellung von Beschichtungen und Verklebungen.

## Claims

**1.** A final aqueous polymer dispersion having a solids volume concentration of at least 50 % by volume and the particle size distribution

5 - 30 % by weight of the polymer ≤ 200 nm
10 - 40 % by weight of the polymer ≤ 300 nm
20 - 45 % by weight of the polymer ≤ 400 nm
25 - 50 % by weight of the polymer ≤ 500 nm
30 - 65 % by weight of the polymer ≤ 600 nm
50 - 90 % by weight of the polymer ≤ 700 nm
80 - 99 % by weight of the polymer ≤ 800 nm
100 % by weight of the polymer ≤ 1000 nm,

obtainable by polymerizing at least one free-radically polymerizable monomer with the addition of at least one aqueous starting dispersion I of a starting polymer I and with or without the addition of at least one aqueous starting dispersion II of a starting polymer II in a polymerization vessel by the method of free radical aqueous emulsion polymerization in the presence of surface active substances and free radical polymerization initiators with the proviso that

a) the starting polymer I is present in the at least one aqueous starting dispersion I in the form of dispersed starting polymer particles of whose total mass at least 1 % by weight has a non-zero particle diameter ≤ 50 nm and at least 65 % by weight has a particle diameter ≥ 300 nm,
b) the mass of the at least one starting polymer I added relative to the total mass formed of the mass of the at least one free-radically polymerizable monomer and of the masses of starting polymers I, II added in the form of aqueous starting dispersions I, II is from 2 to 60 % by weight,
c) the mass of the at least one starting polymer II added relative to the total mass formed of the mass of the at least one free-radically polymerizable monomer and of the mass of starting polymers I, II added in the form of aqueous starting dispersions I, II is at most 15 % by weight,
d) of the total amount of the at least one aqueous starting dispersion I to be added the amount introduced into the polymerization vessel as initial charge prior to the start of the free radical aqueous emulsion polymerization is nil,
e) the total amount of the at least one aqueous starting dispersion II to be added is introduced into the polymerization vessel as initial charge prior to the start of the free radical aqueous emulsion polymerization,
f) of the total amount of the at least one monomer to be polymerized the proportion introduced into the polymerization vessel as initial charge prior to the start of the free radical aqueous emulsion polymerization is nil,
g) the total amount of the at least one monomer to be polymerized is added to the polymerization vessel from the start of the free radical aqueous emulsion polymerization in such a way that at any time of this addition the polymerization conversion of the total monomers alreay added previously to the polymerization vessel is at least 80 mol %,
h) at any time after the start of the free radical aqueous emulsion polymerization the ratio V of the number of moles of the particles of starting polymer I already added previously to the polymerization vessel in the form of the at least one aqueous starting dispersion I to the number of moles of the amount already added previously to the polymerization vessel of the at least one monomer to be free-radically polymerized, standardized for the ratio of the number of moles of the total starting polymer particles to be added in the form of the at least one aqueous starting dispersion I to the number of moles of the total amount of monomers to be free-radically polymerized, is within the range from > 0 to 10,
i) on completion of the addition of the total amount to be added of the at least one aqueous starting dispersion I additionally at most 20 mol % of the total amount of the at least one monomer to be free-radically polymerized

is added to the polymerization vessel,
j) the at least one aqueous starting dispersion I to be added contains at least 1 - 6 % by weight, based on its starting polymer I content, of surface active substances,
k) the at least one aqueous starting dispersion II to be added contains at least 1 - 6 % by weight, based on its starting polymer II content, of surface active substances,
1) the final aqueous polymer dispersion contains from 1 to 6 % by weight of the surface active substances, based on the total mass formed of the mass of the at least one radical polymerizable monomer and of the masses of starting polymers I, II to be added in the form of aqueous starting dispersions I, II,
m) the amount of surface active substances contained in the polymerization vessel at any time from the start of the free radical aqueous emulsion polymerization minus the minimum amounts mentioned under j), k) of surface active substances introduced into the polymerization vessel is less than 5 % by weight, based on the monomers already added previously to the polymerization vessel, and
n) the total amount used of free radical polymerization initiators is from 0.1 to 5 % by weight, based on the total amount of the at least one monomer to be free-radically polymerized, and is added to the polymerization vessel in the course of the free radical aqueous emulsion polymerization in such a way that the free radical aqueous emulsion polymerization continues to a minimum polymerization conversion of the total amount of the at least one monomer to be polymerized of at least 90 mol %.

**2.** A final aqueous polymer dispersion as claimed in claim 1, obtainable when the monomers to be polymerized and the at least one aqueous starting dispersion I to be added are added continuously starting and ending at the same time.

**3.** A final aqueous polymer dispersion as claimed in claim 1 or 2, wherein the mass of the at least one starting polymer I added relative to the total mass formed of the mass of the at least one free-radically polymerizable monomer and of the mass of starting polymers I, II added in the form of aqueous starting dispersions I, II is from 2 to 10 % by weight.

**4.** A final aqueous polymer dispersion as claimed in any of claims 1 to 3, wherein the mass of the at least one monomer to be polymerized relative to the total mass formed of the mass of the at least one free-radically polymerizable monomer and of the mass of starting polymers I, II added in the form of aqueous starting dispersions I, II is at least 80 % by weight.

**5.** A final aqueous polymer dispersion as claimed in any of claims 1 to 4 whose polymer is composed

- to an extent of from 70 to 100 % by weight of esters of acrylic and/or methacrylic acid with alkanols of from 1 to 12 carbon atoms and/or styrene or
- to an extent of from 70 to 100 % by weight of styrene and/or butadiene or
- to an extent of from 70 to 100 % by weight of vinyl chloride and/or vinylidene chloride.

**6.** A final aqueous polymer dispersion as claimed in any of claims 1 to 5 comprising at least one surface active substance of the general formula I

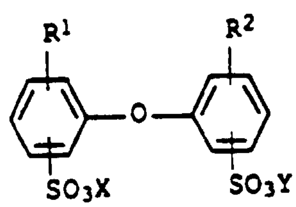

(I),

where $R^1$ and $R^2$ are each hydrogen or $C_4$-$C_{24}$-alkyl, but are not both hydrogen, and X and Y are each an alkali metal or ammonium ion.

**7.** A final aqueous polymer dispersion as claimed in any of claims 1 to 6 whose solids volume concentration is ≥ 65 % by volume.

**8.** A process for preparing a final aqueous polymer dispersion, which comprises polymerizing at least one free-radically polymerizable monomer with the addition of at least one aqueous starting dispersion I of a starting polymer

I and with or without the addition of at least one aqueous starting dispersion II of a starting polymer II in a polymerization vessel by the method of free radical aqueous emulsion polymerization in the presence of surface active substances and free radical polymerization initiators with the proviso that

a) the starting polymer I is present in the at least one aqueous starting dispersion I in the form of dispersed starting polymer particles of whose total mass at least 1 % by weight has a non-zero particle diameter ≤ 50 nm and at least 65 % by weight has a particle diameter ≥ 300 nm,
b) the mass of the at least one starting polymer I added relative to the total mass formed of the mass of the at least one free-radically polymerizable monomer and of the masses of starting polymers I, II added in the form of aqueous starting dispersions I, II is from 2 to 60 % by weight,
c) the mass of the at least one starting polymer II added relative to the total mass formed of the mass of the at least one free-radically polymerizable monomer and of the mass of starting polymers I, II added in the form of aqueous starting dispersions I, II is at most 15 % by weight,
d) of the total amount of the at least one aqueous starting dispersion I to be added the amount introduced into the polymerization vessel as initial charge prior to the start of the free radical aqueous emulsion polymerization is nil,
e) the total amount of the at least one aqueous starting dispersion II to be added is introduced into the polymerization vessel as initial charge prior to the start of the free radical aqueous emulsion polymerization,
f) of the total amount of the at least one monomer to be polymerized the proportion introduced into the polymerization vessel as initial charge prior to the start of the free radical aqueous emulsion polymerization is nil,
g) the total amount of the at least one monomer to be polymerized is added to the polymerization vessel from the start of the free radical aqueous emulsion polymerization in such a way that at any time of this addition the polymerization conversion of the total monomers alreay added previously to the polymerization vessel is at least 80 mol %,
h) at any time after the start of the free radical aqueous emulsion polymerization the ratio V of the number of moles of the particles of starting polymer I already added previously to the polymerization vessel in the form of the at least one aqueous starting dispersion I to the number of moles of the amount already added previously to the polymerization vessel of the at least one monomer to be free-radically polymerized, standardized for the ratio of the number of moles of the total starting polymer particles to be added in the form of the at least one aqueous starting dispersion I to the number of moles of the total amount of monomers to be free-radically polymerized, is within the range from > 0 to 10,
i) on completion of the addition of the total amount to be added of the at least one aqueous starting dispersion I additionally at most 20 mol % of the total amount of the at least one monomer to be free-radically polymerized is added to the polymerization vessel,
j) the at least one aqueous starting dispersion I to be added contains at least 1 - 6 % by weight, based on its starting polymer I content, of surface active substances,
k) the at least one aqueous starting dispersion II to be added contains at least 1 - 6 % by weight, based on its starting polymer II content, of surface active substances,
l) the final aqueous polymer dispersion contains from 1 to 6 % by weight of the surface active substances, based on the total mass formed of the mass of the at least one free-radically polymerizable monomer and of the masses of starting polymers I, II to be added in the form of aqueous starting dispersions I, II,
m) the amount of surface active substances contained in the polymerization vessel at any time from the start of the free radical aqueous emulsion polymerization minus the minimum amounts mentioned under j), k) of surface active substances introduced into the polymerization vessel is less than 5 % by weight, based on the monomers already added previously to the polymerization vessel, and
n) the total amount used of free radical polymerization initiators is from 0.1 to 5 % by weight, based on the total amount of the at least one monomer to be radical polymerized, and is added to the polymerization vessel in the course of the free radical aqueous emulsion polymerization in such a way that the free radical aqueous emulsion polymerization continues to a minimum polymerization conversion of the total amount of the at least one monomer to be polymerized of at least 90 mol %.

9. The use of a final aqueous polymer dispersion as claimed in any of claims 1 to 7 as binder and also as material for preparing coatings and adhesive joints.

**Revendications**

1. Dispersion aqueuse finale de polymères, qui présente une concentration volumique en solides d'au moins 50%

et qui présente la répartition granulométrique suivante :

5 à 30% en poids du polymère ≤ 200 nm
10 à 40% en poids du polymère ≤ 300 nm
20 à 45% en poids du polymère ≤ 400 nm
25 à 50% en poids du polymère ≤ 500 nm
30 à 65% en poids du polymère ≤ 600 nm
50 à 90% en poids du polymère ≤ 700 nm
80 à 99% en poids du polymère ≤ 800 nm
100% en poids du polymère ≤ 1000 nm

que l'on peut obtenir par le fait que l'on polymérise au moins un monomère polymérisable par voie radicalaire, sous addition d'au moins une dispersion aqueuse de départ I d'un polymère de départ I et, éventuellement, sous addition d'au moins une dispersion aqueuse de départ II d'un polymère de départ II dans un récipient de polymérisation selon le procédé de la polymérisation en émulsion aqueuse radicalaire, en présence de substances tensioactives et d'amorceurs de polymérisation radicalaires avec les conditions que

a) le polymère de départ I dans l'au moins une dispersion aqueuse de départ I se présente sous la forme de particules de polymère de départ réparties de façon dispersée de la masse totale desquelles au moins 1% en poids présente un diamètre des particules égal ou inférieur à 50 nm, mais différent de nul et au moins 65% en poids présentent un diamètre des particules égal ou supérieur à 300 nm,
b) la masse de l'au moins un polymère de départ I ajouté, atteigne au moins 2 à 60% en poids, par rapport à la masse globale, constituée de la masse de l'au moins un monomère polymérisable par voie radicalaire et des masses des polymères de départ I, II, ajoutées sous forme des dispersions aqueuses de départ I, II,
c) la masse de l'au moins un polymère de départ ajouté II, atteigne au plus 15% en poids, par rapport à la masse globale, constituée par la masse de l'au moins un monomère polymérisable par voie radicalaire et des masses des polymères de départ I, II, ajoutées sous forme des dispersions aqueuses de départ I, II,
d) de la masse globale de l'au moins une dispersion aqueuse de départ I à ajouter, on n'introduise rien au préalable dans le récipient de polymérisation avant le début de la polymérisation en émulsion aqueuse radicalaire,
e) l'on introduise au préalable dans le récipient de polymérisation la masse globale de l'au moins une dispersion aqueuse de départ II à ajouter avant le début de la polymérisation en émulsion aqueuse radicalaire,
f) de la masse globale de l'au moins un monomère à polymériser, on n'introduise au préalable rien dans le récipient de polymérisation avant le début de la polymérisation en émulsion aqueuse radicalaire,
g) on amène au récipient de polymérisation la masse globale de l'au moins un monomère à polymériser à partir du début de la polymérisation en émulsion aqueuse radicalaire, en une manière telle qu'à chaque moment de cette amenée, le taux de polymérisation des monomères amenés antérieurement déjà au total au récipient de polymérisation atteigne au moins 80% molaires,
h) à chaque moment après le début de la polymérisation en émulsion aqueuse radicalaire, le rapport V du nombre de moles de particules en polymère de départ I déjà antérieurement amenées sous forme de l'au moins une dispersion aqueuse de départ I au nombre de moles de la proportion déjà antérieurement amenée au récipient de polymérisation de l'au moins un monomère à polymériser par voie radicalaire, normalisé sur le rapport du nombre de moles des particules de polymère de départ à amener au total sous forme de l'au moins une dispersion aqueuse I au nombre de moles des monomères à polymériser par voie radicalaire au total, fluctue de plus de 0 à 10,
i) après l'achèvement de l'amenée de la quantité à amener au total de l'au moins une dispersion aqueuse de départ I, on n'amène plus qu'au plus 20% molaires de la quantité totale de l'au moins un monomère à polymériser par voie radicalaire au récipient de polymérisation,
j) l'au moins une dispersion aqueuse de départ I à ajouter contienne, par rapport à sa teneur en polymère de départ I, au moins 1 à 6% en poids de substances tensioactives,
k) l'au moins une dispersion aqueuse de départ II à ajouter contienne, par rapport à sa teneur en polymère de départ II, au moins 1 à 6% en poids de substances tensioactives,
l) la dispersion aqueuse finale de polymères contienne, par rapport à la masse globale, constituée de la masse de l'au moins un monomère polymérisable par voie radicalaire et des masses des polymères de départ I, II à ajouter sous la forme des dispersions aqueuses de départ I, II, 1 à 6% en poids de substances tensioactives,
m) la quantité de substances tensioactives contenue à chaque moment au début de la polymérisation en émulsion aqueuse radicalaire dans le récipient de polymérisation, déduction faite des substances tensioactives introduites dans le récipient de polymérisation sous la forme des proportions minimales citées sous j), k)

soit, rapportée aux monomères déjà antérieurement amenés au récipient de polymérisation, inférieure à 5% en poids, et

n) la quantité mise en oeuvre au total en amorceurs de polymérisation radicalaires, rapportée à la quantité totale de l'au moins un monomère à polymériser par voie radicalaire, atteigne 0,1 à 5% en poids et, au cours du déroulement de la polymérisation en émulsion aqueuse radicalaire, on l'amène au récipient de polymérisation en une manière telle que la polymérisation en émulsion aqueuse radicalaire progresse jusqu'à un taux de polymérisation minimal de la quantité totale de l'au moins un monomère à polymériser d'au moins 90% molaires.

**2.** Dispersion aqueuse finale de polymères suivant la revendication 1, que l'on peut obtenir par le fait que l'on amène les monomères à polymériser et l'au moins une dispersion aqueuse de départ I à amener en commençant et en finissant simultanément.

**3.** Dispersion aqueuse finale de polymères suivant la revendication 1 ou 2, où la masse de l'au moins un polymère de départ I ajouté fluctue de 2 à 10% en poids, par rapport à la masse globale, formée de la masse de l'au moins un monomère polymérisable par voie radicalaire et des masses de polymères de départ I, II, ajoutées sous forme des dispersions aqueuses de départ I, II.

**4.** Dispersion aqueuse finale de polymères suivant les revendications 1 à 3, où la masse de l'au moins un monomère à polymériser atteint au moins 80% en poids, par rapport à la masse globale, formée par la masse de l'au moins un monomère polymérisable par voie radicalaire et des masses de polymères de départ I, II ajoutées sous forme des dispersions aqueuses de départ I, II.

**5.** Dispersion aqueuse finale de polymères suivant les revendications 1 à 4, dont le polymère est constitué

- pour jusqu'à 70 à 100% en poids d'esters de l'acide acrylique et/ou de l'acide méthacrylique avec des alcanols présentant de 1 à 12 atomes de carbone et/ou le styrène,

  ou

- pour jusqu'à 70 à 100% en poids de styrène et/ou de butadiène,

  ou

- pour jusqu'à 70 à 100% en poids de chlorure de vinyle et/ou de chlorure de vinylidène.

**6.** Dispersion aqueuse finale de polymères suivant les revendications 1 à 5, qui contient au moins une substance tensioactive de la formule générale I :

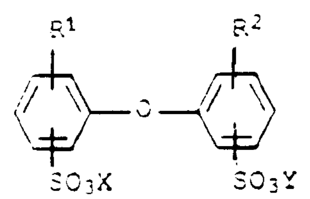

(I)

dans laquelle les symboles $R^1$ et $R^2$ représentent des atomes d'hydrogène ou des radicaux alkyle en $C_4$ à $C_{24}$ et ne représentent pas simultanément de l'hydrogène et X et Y peuvent être des ions de métaux alcalins et/ou des ions ammonium.

**7.** Dispersion aqueuse finale de polymères suivant les revendications 1 à 6, dont la concentration volumique en substances solides est égale ou supérieure à 65%.

**8.** Procédé de préparation d'une dispersion aqueuse finale de polymères, caractérisé en ce que l'on polymérise au moins un monomère polymérisable par voie radicalaire, sous addition d'au moins une dispersion aqueuse de départ I d'un polymère de départ I et, éventuellement, sous addition d'au moins une dispersion aqueuse de départ

II d'un polymère de départ II dans un récipient de polymérisation selon le procédé de la polymérisation en émulsion aqueuse radicalaire, en présence de substances tensioactives et d'amorceurs de polymérisation radicalaires avec les conditions que

a) le polymère de départ I dans l'au moins une dispersion aqueuse de départ I se présente sous la forme de particules de polymère de départ réparties de façon dispersée de la masse totale desquelles au moins 1% en poids présente un diamètre des particules égal ou inférieur à 50 nm, mais différant de nul et au moins 65% en poids présentent un diamètre des particules égal ou supérieur à 300 nm,
b) la masse de l'au moins un polymère de départ I ajouté, atteigne au moins 2 à 60% en poids, par rapport à la masse globale, constituée de la masse de l'au moins un monomère polymérisable par voie radicalaire et des masses des polymères de départ I, II, ajoutées sous forme des dispersions aqueuses de départ I, II,
c) la masse de l'au moins un polymère de départ ajouté II, atteigne au plus 15% en poids, par rapport à la masse globale, constituée par la masse de l'au moins un monomère polymérisable par voie radicalaire et des masses des polymères de départ I, II, ajoutées sous forme des dispersions aqueuses de départ I, II,
d) de la masse globale de l'au moins une dispersion aqueuse de départ I à ajouter, on n'introduise rien au préalable dans le récipient de polymérisation avant le début de la polymérisation en émulsion aqueuse radicalaire,
e) l'on introduise au préalable dans le récipient de polymérisation la masse globale de l'au moins une dispersion aqueuse de départ II à ajouter avant le début de la polymérisation en émulsion aqueuse radicalaire,
f) de la masse globale de l'au moins un monomère à polymériser, on n'introduise au préalable rien dans le récipient de polymérisation avant le début de la polymérisation en émulsion aqueuse radicalaire,
g) on amène au récipient de polymérisation la masse globale de l'au moins un monomère à polymériser à partir du début de la polymérisation en émulsion aqueuse radicalaire, en une manière telle qu'à chaque moment de cette amenée, le taux de polymérisation des monomères amenés antérieurement déjà au total au récipient de polymérisation atteigne au moins 80% molaires,
h) à chaque moment après le début de la polymérisation en émulsion aqueuse radicalaire, le rapport V du nombre de moles de particules en polymère de départ I déjà antérieurement amenées sous forme de l'au moins une dispersion aqueuse de départ I au nombre de moles de la proportion déjà antérieurement amenée au récipient de polymérisation de l'au moins un monomère à polymériser par voie radicalaire, normalisé sur le rapport du nombre de moles des particules de polymère de départ à amener au total sous forme de l'au moins une dispersion aqueuse I au nombre de moles des monomères à polymériser par voie radicalaire au total, fluctue de plus de 0 à 10,
i) après l'achèvement de l'amenée de la quantité à amener au total de l'au moins une dispersion aqueuse de départ I, on n'amène plus qu'au plus 20% molaires de la quantité totale de l'au moins un monomère à polymériser par voie radicalaire au récipient de polymérisation,
j) l'au moins une dispersion aqueuse de départ I à ajouter contienne, par rapport à sa teneur en polymère de départ I, au moins 1 à 6% en poids de substances tensioactives,
k) l'au moins une dispersion aqueuse de départ II à ajouter contienne, par rapport à sa teneur en polymère de départ II, au moins 1 à 6% en poids de substances tensioactives,
l) la dispersion aqueuse finale de polymères contienne, par rapport à la masse globale, constituée de la masse de l'au moins un monomère polymérisable par voie radicalaire et des masses des polymères de départ I, II à ajouter sous la forme des dispersions aqueuses de départ I, II, 1 à 6% en poids de substances tensioactives,
m) la quantité de substances tensioactives contenue à chaque moment au début de la polymérisation en émulsion aqueuse radicalaire dans le récipient de polymérisation, déduction faite des substances tensioactives introduites dans le récipient de polymérisation sous la forme des proportions minimales citées sous j), k) soit, rapportée aux monomères déjà antérieurement amenés au récipient de polymérisation, inférieure à 5% en poids, et
n) la quantité mise en oeuvre au total en amorceurs de polymérisation radicalaires, rapportée à la quantité totale de l'au moins un monomère à polymériser par voie radicalaire, atteigne 0,1 à 5% en poids et, au cours du déroulement de la polymérisation en émulsion aqueuse radicalaire, on l'amène au récipient de polymérisation en une manière telle que la polymérisation en émulsion aqueuse radicalaire progresse jusqu'à un taux de polymérisation minimal de la quantité totale de l'au moins un monomère à polymériser d'au moins 90% molaires.

**9.** Utilisation d'une dispersion aqueuse finale de polymères suivant les revendications 1 à 7, à titre de liant comme aussi de masse pour la préparation de revêtements et de collages.